(19) Europäisches Patentamt
European Patent Office
Office européen des brevets

(11) **EP 4 779 286 A1**

(12) **EUROPEAN PATENT APPLICATION**
published in accordance with Art. 153(4) EPC

(43) Date of publication:
**22.07.2026 Bulletin 2026/30**

(21) Application number: **23952247.7**

(22) Date of filing: **14.09.2023**

(51) International Patent Classification (IPC):
***G01M 17/007*** *(2006.01)*

(52) Cooperative Patent Classification (CPC):
**B62D 15/025; G01M 17/007; G01M 17/0074; G01M 17/06; G01M 17/065**

(86) International application number:
**PCT/JP2023/033498**

(87) International publication number:
**WO 2025/057357 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **TMEIC Corporation**
**Tokyo 104-0031 (JP)**

(72) Inventors:
- **KUWAHARA Atsushi**
  **Tokyo 104-0031 (JP)**
- **KOHYAMA Yasushi**
  **Tokyo 104-0031 (JP)**
- **KOTOO Kohsuke**
  **Tokyo 104-0031 (JP)**
- **OHTSUKA Junji**
  **Tokyo 104-0031 (JP)**

(74) Representative: **TBK**
**Bavariaring 4-6**
**80336 München (DE)**

# (54) CHASSIS DYNAMOMETER AND METHOD FOR CONTROLLING CHASSIS DYNAMOMETER

(57) This disclosure has an object of obtaining a chassis dynamometer that adapts to a driving state of a vehicle and can conduct a driving test on the vehicle with high accuracy. A steering model controller (22) in a chassis dynamometer (1) of the disclosure executes a turning determination process of determining whether a driving state of a vehicle (60) is a steering/turning state or a driving straight state based on comparison results between a turning radius for determination and turning radii for comparison calculated based on left steering angle information (S1L) and right steering angle information (S1R). Then, the steering model controller (22) executes a turning control process as a roller control process to be executed in determining that the vehicle (60) is in the steering/turning state. The turning control process is a process of outputting, to a roller driving mechanism (DM1), four roller driving commands at which four rollers adapt to the steering/turning state of the vehicle (60) and are rotationally driven.

FIG. 1

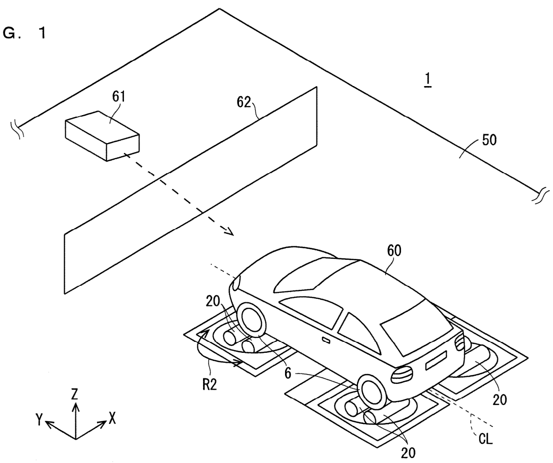


EP 4 779 286 A1

## Description

TECHNICAL FIELD

The present disclosure relates to a chassis dynamometer to be used in various driving tests on vehicles, and a method of controlling the chassis dynamometer.

BACKGROUND ART

Chassis dynamometers have conventionally been used in driving tests on vehicles (automobiles), and each include roller devices as main constituent elements.
Examples of the conventional chassis dynamometers include the chassis dynamometer disclosed in Patent Document 1.
The conventional chassis dynamometer disclosed in Patent Document 1 simulates a state in which a four-wheel drive vehicle that is a test vehicle is turning on a road at a preset steering angle and a preset test speed.

PRIOR ART DOCUMENT

PATENT DOCUMENT

Patent Document 1: Japanese Patent Application Laid-Open No. S63-148140

SUMMARY

PROBLEM TO BE SOLVED BY THE INVENTION

The conventional chassis dynamometers represented by the one in Patent Document 1, however, each do not include any roller turning mechanism that turns rollers. When a driving state of the vehicle is a steering/turning state, each of the chassis dynamometers conducts the driving test without assuming behaviors of the roller turning mechanism.
Thus, the conventional chassis dynamometers have a problem of failing to conduct driving tests on vehicles involving the steering/turning state with high accuracy.
This disclosure has been conceived to solve the problem, and has an object of obtaining a chassis dynamometer that adapts to a driving state of the vehicle involving the steering/turning state and can conduct a driving test on a vehicle with high accuracy.

MEANS TO SOLVE THE PROBLEM

A chassis dynamometer according to the present disclosure is a chassis dynamometer including four rollers on which four tires of a vehicle are placed, the four tires including a front-wheel tire pair and a rear-wheel tire pair, one of the front-wheel tire pair and the rear-wheel tire pair being defined as a first-type tire pair, and the other of the front-wheel tire pair and the rear-wheel tire pair being defined as a second-type tire pair, the first-type tire pair including a first-type left tire and a first-type right tire that are disposed at both sides, the second-type tire pair including a second-type left tire and a second-type right tire that are disposed at both sides, the four rollers including a first-type left roller on which the first-type left tire is placed, a first-type right roller on which the first-type right tire is placed, a second-type left roller on which the second-type left tire is placed, and a second-type right roller on which the second-type right tire is placed, the chassis dynamometer including: a steering angle detection mechanism detecting left steering angle information indicating a left tire turning angle that is an angle of the first-type left tire with respect to a reference direction, and detecting right steering angle information indicating a right tire turning angle that is an angle of the first-type right tire with respect to the reference direction; and a roller driving control mechanism executing roller driving control processing of rotationally driving the four rollers so that the rollers adapt to a driving state of the vehicle.

EFFECTS OF THE INVENTION

Since the roller driving control mechanism in the chassis dynamometer according to the present disclosure executes the roller driving control processing based on the left steering angle information and the right steering angle information, the chassis dynamometer can conduct a driving test on the vehicle with high accuracy even when the driving state of the vehicle is the steering/turning state.
The objects, features, aspects, and advantages of the present disclosure will become more apparent from the following detailed description and the accompanying drawings.

BRIEF DESCRIPTION OF DRAWINGS

[FIG. 1] is a perspective view schematically illustrating a structure of a chassis dynamometer according to an embodiment on which a vehicle has been placed.

[FIG. 2] schematically illustrates displacement sensors and its periphery in the chassis dynamometer according to the embodiment.

[FIG. 3] schematically illustrates a cross section A-A in FIG. 2.

[FIG. 4] schematically illustrates a structure of a roller turning mechanism.

[FIG. 5] schematically illustrates elements of a distance measurement region in a tire.

[FIG. 6] is a flowchart illustrating a method of obtaining angle measurement information by the displacement sensor according to the embodiment.

[FIG. 7] schematically illustrates a structure of a roller driving control mechanism in the chassis dynamometer according to the embodiment.

[FIG. 8] schematically illustrates a drive system of the roller turning mechanism in the chassis dynamometer according to the embodiment.

[FIG. 9] is a flowchart (part 1) illustrating control operations by a steering model controller in FIG. 7.

[FIG. 10] is a flowchart (part 2) illustrating control operations by the steering model controller in FIG. 7.

[FIG. 11] illustrates processing details of a turning determination process.

[FIG. 12] schematically illustrates a driving state of the vehicle.

[FIG. 13] is a flowchart illustrating a procedure of a method of controlling turning of the roller turning mechanism according to the embodiment.

DESCRIPTION OF EMBODIMENTS

[Embodiment]

[Overall structure]

FIG. 1 is a perspective view schematically illustrating a structure of a chassis dynamometer 1 according to an embodiment on which a vehicle 60 has been placed. FIG. 1 illustrates an XYZ rectangular coordinate system.

As illustrated in FIG. 1, four tires 6 of the vehicle 60 are placed on roller pairs 20 of four roller devices 2. Each of the roller devices 2 includes the roller pair 20 on which the tire 6 of the vehicle 60 is placed. When the vehicle 60 is tested, a vehicle immobilizer that is not illustrated secures the vehicle 60 placed on the roller pairs 20 of the four roller devices 2.

A rectangular image simulator 62 with a long direction in the X direction and with a short direction in the Z direction is disposed in front of the vehicle 60 (in the +Y direction) on a floor 50. The image simulator 62, which is a simulation auxiliary component, has a display function of displaying all views visually recognizable from the vehicle 60.

Furthermore, the vehicle 60 may include an external sensor that is not illustrated. Conceivable examples of the external sensor include a radar and a lidar (LiDAR) to be used in a corner sensor, and a side camera (an electronic side mirror).

The chassis dynamometer 1 receives information on the vehicle 60 from the external sensor as necessary using, for example, steering angle information on the tires 6 of the vehicle 60 or the image simulator 62 as necessary, and performs driving tests on the vehicle 60. The driving tests include a test involving a tire turning operation of turning the tires 6 of the vehicle 60, and a roller turning operation of turning the roller pairs 20 concurrently with the tire turning operation.

[Definition of terms on vehicle 60]

In this Description, the tires 6 of the vehicle 60 are classified into a first-type tire pair and a second-type tire pair. In the embodiment to be described below, of a front-wheel tire pair and a rear-wheel tire pair of the four tires 6 of the vehicle 60, the front-wheel tire pair is defined as the first-type tire pair, and the rear-wheel tire pair is defined as the second-type tire pair.

Thus, the first-type tire pair includes a first-type left tire and a first-type right tire that are disposed at both sides. The first-type left tire is a front-wheel tire 6L, and the first-type right tire is a front-wheel tire 6R.

Similarly, the second-type tire pair includes a second-type left tire and a second-type right tire that are disposed at both sides. The second-type left tire is a rear-wheel tire 6L, and the second-type right tire is a rear-wheel tire 6R.

The four rollers are classified into a first-type left roller on which the front-left-wheel tire that is the first-type left tire is placed, a first-type right roller on which the front-right-wheel tire that is the first-type right tire is placed, a second-type left roller on which the rear-left-wheel tire that is the second-type left tire is placed, and a second-type right roller on which the rear-right-wheel tire that is the second-type right tire is placed. FIG. 1 illustrates the four roller pairs 20 as the four rollers.

[Structure of displacement sensor 7]

FIG. 2 schematically illustrates displacement sensors 7 and its periphery in the chassis dynamometer 1 according to the embodiment. FIG. 2 illustrates the XYZ rectangular coordinate system. The displacement sensors 7 are main constituent elements of the first aspect of a steering angle detection mechanism as will be described later.

A roller turning mechanism 3L (a left turning mechanism) with a turning platform 32L executes a left roller turning operation of turning the roller pair 20 of the first-type left rollers (a front roller 20F + a rear roller 20B) as left turning objects along a roller turning direction R2. The turning platform 32L turns in the roller turning direction R2 in the left roller turning operation.

Similarly, a roller turning mechanism 3R (a right turning mechanism) with a turning platform 32R executes a right roller turning operation of turning the roller pair 20 of the first-type right rollers (the front roller 20F + the rear roller 20B) as right turning objects along the roller turning direction R2. The turning platform 32R turns in the roller turning direction R2 in the right roller turning operation.

FIG. 2 illustrates that the tire 6L that is the first-type left tire is placed on the first-type left rollers and the tire 6R that is the first-type right tire is placed on the first-type right rollers.

A left displacement sensor 7L detects a left tire turning angle that is an angle (steering angle) with respect to a fixed reference direction (a forward and backward direction; Y direction) of the tire 6L, using a distance measurement region 90 in the tire 6L to be described later as a detection target to obtain left steering angle information S7L. In other words, the left steering angle information S7L indicates the left tire turning angle detected by the left displacement sensor 7L as an angular displacement. A tire angle detection range 37L indicates a detection range of the left displacement sensor 7L.

Similarly, a right displacement sensor 7R detects a right tire turning angle that is an angle with respect to the fixed reference direction of the tire 6R, using the distance measurement region 90 in the tire 6R as a detection target to obtain right steering angle information S7R. The right steering angle information S7R indicates the right tire turning angle detected by the right displacement sensor 7R as an angular displacement. A tire angle detection range 37R indicates a detection range of the right displacement sensor 7R.

The fixed reference direction of the tires 6 according to the embodiment is not changed according to the roller turning operation. As such, the fixed reference direction is used as a reference direction for the tire turning angles in the embodiment.

The left displacement sensor 7L is fixedly disposed in an external region of the turning platform 32L, and the right displacement sensor 7R is fixedly disposed in an external region of the turning platform 32R. In other words, the left displacement sensor 7L is not included as the left turning objects because the left displacement sensor 7L is fixedly disposed in a non-moving position when the left turning mechanism executes the left roller turning operation. Similarly, the right displacement sensor 7R is not included as the right turning objects because the right displacement sensor 7R is fixedly disposed in a non-moving position when the right turning mechanism executes the right roller turning operation.

FIG. 3 schematically illustrates a cross section A-A in FIG. 2. FIG. 3 illustrates the XYZ rectangular coordinate system. As illustrated in FIG. 3, the tire 6 (tire 6L) includes the distance measurement region 90 downward as a measurement target region, and the distance measurement region 90 includes a plurality of measurement points 9 along a linear direction (the Y direction in FIG. 3). The plurality of measurement points 9 have features recognizable by the left displacement sensor 7L. Conceivable examples of the features recognizable by the left displacement sensor 7L include various shapes such as a protrusion.

The left displacement sensor 7L has a distance detection function of detecting a plurality of (sensor-to-tire) measurement distances from (a detection point of) the left displacement sensor 7L to the plurality of measurement points 9 to obtain distance information. The right displacement sensor 7R obviously has the cross-sectional structure in FIG. 3 and the distance detection function, similarly to the left displacement sensor 7L.

FIG. 4 schematically illustrates a structure of the roller turning mechanism 3. The roller turning mechanism 3 in FIG. 4 has a structure common to the left turning mechanism (the roller turning mechanism 3L) and the right turning mechanism (the roller turning mechanism 3R). The roller turning mechanisms 3L and 3R may be collectively simply referred to as "roller turning mechanisms 3".

Each of the roller turning mechanisms 3 includes, as main constituent elements, a turning structure 31 (the roller device 2), a turning bearing 34, a base 36, and a turning motor 42 (42L or 42R). The turning structure 31 includes a turning platform 32 (32L or 32R) and a turning bed 35, and is integrated with the roller device 2 including the roller pair 20. The roller turning mechanism 3 includes, as constituent elements, a motor drive 19 and an encoder 55 of which illustration is omitted in FIG. 3 and will be described later.

The turning motor 42 is a motor with gears that can control a speed. The gears are attached to the end of the turning motor 42 to be engaged in gears (not illustrated) attached around the outer periphery of the base 36. Thus, rotating the turning motor 42 can turn the turning bed 35.

The turning bearing 34 turnably supports the turning bed 35, and turns the turning bed 35 with the power of the turning motor 42, using the center of the turning bearing 34 as a pivot. Rotation of the turning bed 35 rotates the turning structure 31.

As such, the roller turning mechanism 3 includes the turning structure 31 turned by the turning motor 42. Thus, the roller turning mechanism 3L turns the turning structure 31 with the power of the turning motor 42L, so that the turning platform 32L turns in the roller turning direction R2 as illustrated in FIG. 2. Similarly, the roller turning mechanism 3R turns the turning structure 31 with the power of the turning motor 42L, so that the turning platform 32R turns in the roller turning direction R2 as illustrated in FIG. 2.

Hereinafter, the left displacement sensor 7L and the right displacement sensor 7R may be collectively simply referred to as the "displacement sensors 7", and the left steering angle information S7L and the right steering angle information S7R may be collectively simply referred to as "steering angle information S7".

FIG. 5 schematically illustrates elements of the distance measurement region 90 (measurement target region) in the tire 6. As illustrated in FIG. 5, the distance measurement region 90 includes eight measurement points 91 to 98 as the plurality of measurement points 9. The eight measurement points 91 to 98 are examples of the measurement points. Obviously, the number of the measurement points is not limited to eight.

FIG. 6 is a flowchart illustrating a method of obtaining the steering angle information S7 by the displacement sensor 7. Hereinafter, details of obtaining the steering angle information S7 will be described with reference to FIGS. 5 and 6.

In Step ST1, first, a process of computing measurement point coordinates is executed. The process of computing measurement point coordinates includes partial Steps ST1-1 and ST1-2 below.

Step ST1-1 is a partial step of obtaining distances from the displacement sensor 7 to the measurement points 91 to 98 as measurement distances L91 to L98, respectively. The displacement sensor 7 detects distances from the displacement sensor 7 to the measurement points 91 to 98 to obtain the measurement distances L91 to L98, respectively. As such, the displacement sensor 7 has the distance detection function of obtaining the plurality of measurement distances (the measurement distances L91 to L98) from the displacement sensor 7 to the plurality of measurement points (the measurement points 91 to 98).

Step ST1-2 is a partial step of obtaining, as measurement coordinates C91 to C98, coordinate positions of the measurement points 91 to 98 on the horizon plane (an XY plane) from the measurement distances L91 to L98, respectively.

Execution of the process of computing measurement point coordinates (ST1) including the partial steps ST1-1 and ST1-2 can obtain, as a plurality of measurement coordinates, the measurement coordinates C91 to C98 at the measurement points 91 to 98 that are a plurality of measurement points.

Next in Step ST2, a tire approximate linear line that is a regression line is calculated based on the measurement coordinates C91 to C98 each indicating the coordinate position and obtained in Step ST1. This tire approximate linear line is a straight line indicating the direction of the tire 6.

Then, in Step ST3, the tire turning angle is obtained from an angle formed between a reference direction prepared in advance and the tire approximate linear line. The reference direction in the embodiment is the fixed reference direction indicating, for example, the forward direction (Y direction) that is the forward and backward direction of the vehicle 60. Thus, the tire turning angle obtained by the roller turning mechanism 3L is the left tire turning angle, and the tire turning angle obtained by the roller turning mechanism 3R is the right tire turning angle.

Then in Step ST4, the displacement sensor 7 outputs the steering angle information S7 indicating the tire turning angle calculated in Step ST3. In other words, the steering angle information S7 indicates the tire turning angle as an angular displacement.

As such, the chassis dynamometer 1 according to the embodiment can calculate the tire turning angle that is the angular displacement, with the distance measurement region 90 (measurement target region) in the tire 6 as a detection target using the displacement sensor 7 having the distance detection function.

Thus, the left displacement sensor 7L detects the left steering angle information S7L indicating the left tire turning angle that is an angle of the first-type left tire with respect to the reference direction, and the right displacement sensor 7R detects the right steering angle information S7R indicating the right tire turning angle that is an angle of the first-type right tire with respect to the reference direction.

[Roller driving control mechanism of chassis dynamometer 1]

FIG. 7 schematically illustrates a structure of a roller driving control mechanism in the chassis dynamometer 1 according to the embodiment. As illustrated in FIG. 7, the roller driving control mechanism includes, as main constituent elements, a dynamo control apparatus 75, a control system including the left displacement sensor 7L, the right displacement sensor 7R, and a steering wheel angle sensor 5, and a roller driving mechanism DM1.

The roller driving mechanism DM1 includes, as main constituent elements, motor drives 26L, 26R, 27L, and 27R, a front-left-wheel roller driving motor 58L, a front-right-wheel roller driving motor 58R, a rear-left-wheel roller driving motor 68L, a rear-right-wheel roller driving motor 68R, and encoders 59L, 59R, 69L, and 69R.

As illustrated in FIG. 7, the control system combined with the roller driving mechanism DM1 forms the roller driving control mechanism in the chassis dynamometer 1.

The roller driving control mechanism executes roller driving control processing of rotationally driving the four rollers based on left steering angle information S1L and right steering angle information S1R so that the rollers adapt to a driving state of the vehicle 60.

The roller driving control processing includes a steering angle recognition process, a turning determination process, a roller driving process, and a roller control process, which will be described later.

The dynamo control apparatus 75 includes, as main constituent element, a steering model controller 22, contacts P1 to P4, and a steering angle conversion table T1.

The steering model controller 22 executes the turning determination process and the roller control process, which will be described later. The roller control process includes a turning control process and a driving straight control process, which will be described later.

When each of the contacts P1 to P4 receives a switching signal SX that is "H" (high), the contacts P1 and P3 are validated, and the contacts P2 and P4 are invalidated. When the switching signal SX is "L" (low), the contacts P1 and P3 are invalidated, and the contacts P2 and P4 are validated.

The first aspect of the steering angle detection mechanism is a structure including the left displacement sensor 7L and the right displacement sensor 7R.

The left displacement sensor 7L detects the left tire turning angle of the first-type left tire using the distance measurement region 90 (measurement target region) in the first-type left tire as a detection target to obtain the left steering angle information S7L.

The right displacement sensor 7R detects the right tire turning angle of the first-type right tire using the distance measurement region 90 (measurement target region) in the first-type right tire as a detection target to obtain the right steering angle information S7R.

When the first aspect of the steering angle detection mechanism is used, the switching signal SX is "L", and the contacts P2 and P4 are validated. Thus, the steering model controller 22 captures the left steering angle information S7L as the left steering angle information S1L as it is through the contact P2, and captures the right steering angle information S7R as the right turning information S1R as it is through the contact P4.

The second aspect of the steering angle detection mechanism is a structure including the steering model controller 22, the steering angle conversion table T1, and the steering wheel angle sensor 5. When the steering model controller 22 is employed as the second aspect of the steering angle detection mechanism, the steering model controller 22 executes the steering angle recognition process, which will be described later.

The steering wheel angle sensor 5 detects a steering wheel angle during a steering operation of the vehicle 60 to obtain steering wheel angle information S5 indicating the detected steering wheel angle.

The steering angle conversion table T1 has angle pair information of multiple types. The angle pair information of multiple types is information indicating left tire steering angles of multiple types and right tire steering angles of multiple types, in a format corresponding to steering wheel angles of multiple types. The left tire steering angles of multiple types correspond to left tire turning angles, and the right tire steering angles of multiple types correspond to right tire turning angles. The steering angle conversion table T1 corresponds to, for example, the steering angle conversion table T1 disclosed in Japanese Patent Application Laid-Open No. 2022-175289 (FIGS. 7 and 13).

Upon receipt of the steering wheel angle information S5, the steering model controller 22 executes the steering angle recognition process of obtaining the left steering angle information S1L and the right turning information S1R from the steering angle conversion table T1 based on the steering wheel angle information S5. The steering angle recognition process is a process included in the roller driving control processing. The steering model controller 22 executes the steering angle recognition process only when the steering model controller 22 is employed as the second aspect of the steering angle detection mechanism.

When the second aspect of the steering angle detection mechanism is used, the switching signal SX is "H", and the contacts P1 and P3 are validated. Thus, the steering model controller 22 can access the steering angle conversion table T1 through the contacts P1 and P3.

The steering angle recognition process is a process of selecting a left tire steering angle and a right tire steering angle which correspond to the steering wheel angle indicated by the steering wheel angle information S5, from among the left tire steering angles of multiple types and the right tire steering angles of multiple types, respectively, with reference to the steering angle conversion table T1, and obtaining information indicating the selected left tire steering angle and information indicating the selected right tire steering angle as the left steering angle information S1L and the right turning information S1R, respectively.

Upon execution of the steering angle recognition process, the steering model controller 22 captures information indicating the left tire steering angle selected from the steering angle conversion table T1 as the left steering angle information S1L through the contact P1, and captures information indicating the right tire steering angle selected from the steering angle conversion table T1 as the right steering angle information S1R through the contact P3.

Consequently, by using the first aspect or the second aspect, the steering angle detection mechanism according to the embodiment can detect the left steering angle information S1L indicating the left tire steering angle corresponding to the left tire turning angle that is an angle with respect to the reference direction (Y direction) of the first-type left tire, and the right turning information S1R indicating the right tire steering angle corresponding to the right tire turning angle that is an angle of the first-type right tire with respect to the reference direction.

Although the dynamo control apparatus 75 in FIG. 7 is configured to selectively use the first and second aspects of the steering angle detection mechanism, the dynamo control apparatus 75 configured to use at least one of the first and second aspects of the steering angle detection mechanism can execute the roller driving control processing under control of the steering model controller 22.

FIG. 8 schematically illustrates a drive system of the roller turning mechanism 3 in the chassis dynamometer 1 according to the embodiment.

As illustrated in FIG. 8, the chassis dynamometer 1 includes a turning controller 15 and the roller turning mechanism 3. The roller turning mechanism 3 includes, as main constituent elements, the motor drive 19 (19L or 19R), the turning motor 42 (42L or 42R), and the encoder 55. The turning controller 15 is a constituent element in the dynamo control apparatus 75. FIG. 8 omits the illustration of, for example, the first and second aspects of the steering angle detection mechanism and the steering model controller 22 in FIG. 7.

As illustrated in FIG. 8, the turning controller 15 receives the steering angle information S1 (the left steering angle information S1L + the right steering angle information S1R) from the steering angle detection mechanism, and calculates a steering angle corresponding to the tire turning angle indicated by the steering angle information S1.

Then, the turning controller 15 outputs steering angle instruction information SG indicating the calculated steering angle to the motor drive 19. The motor drive 19 outputs, to the turning motor 42, a driving control signal S19 indicating a roller turning operation at a turning angle corresponding to the steering angle indicated by the steering angle instruction information SG. The motor drive 19 receives encoder information S55 as a feedback signal from the encoder 55. The encoder information S55 includes a measurement value of a turning angle of the turning structure 31 with respect to the reference direction.

Thus, the motor drive 19L drives the turning motor 42L, so that the roller turning mechanism 3L (left turning mechanism) executes a left roller turning operation of turning the first-type left rollers along the roller turning direction R2. Similarly, the motor drive 19R drives the turning motor 42R, so that the roller turning mechanism 3R (left turning mechanism) executes a right roller turning operation of turning the first-type right rollers along the roller turning direction R2.

FIGS. 9 and 10 are flowcharts illustrating control operations by the steering model controller 22 in FIG. 7. Hereinafter, the control operations by the steering model controller 22 will be described with reference to FIGS. 9 and 10.

First, in Step ST10, a steering operation of the chassis dynamometer 1 is started using, as a trigger, reception of a steering operation command signal S70 indicating operation start from an external apparatus 70.

In Step ST11, controllers including the steering model controller 22 and the turning controller 15 are set to a waiting state.

Then, in Step ST12, a steering operation of the vehicle 60 is started. In other words, the vehicle 60 on the chassis dynamometer 1 is set to a driving state.

Next, whether the displacement sensors 7 (the left displacement sensor 7L + the right displacement sensor 7R) are used is checked in Step ST13. When the displacement sensors 7 are used (YES), the processes proceed to Step ST14. When the displacement sensors 7 are not used (NO), the processes proceed to Step ST15.

In Step ST14 to be executed if YES in Step ST13, the first aspect of the steering angle detection mechanism (the left displacement sensor 7L + the right displacement sensor 7R) is employed. Thus, the "L" switching signal SX validates the contacts P2 and P4 and invalidates P1 and P3 of the contacts P1 to P4.

Consequently, the steering model controller 22 captures the left steering angle information S7L detected by the left displacement sensor 7L as the left steering angle information S1L as it is, and captures the right steering angle information S7R detected by the right displacement sensor 7R as the right steering angle information S1R as it is.

As such, when the first aspect of the steering angle detection mechanism is employed, the turning controller 15 can obtain the left steering angle information S7L and the right steering angle information S7R as the left steering angle information S1L and the right steering angle information S1R, respectively.

In Step ST15 to be executed if NO in Step ST13, the second aspect of the steering angle detection mechanism (the steering model controller 22 + the steering angle conversion table T1 + the steering wheel angle sensor 5) is employed. Thus, the "H" switching signal SX validates the contacts P1 and P3 and invalidates P2 and P4 of the contacts P1 to P4.

Consequently, the steering model controller 22 captures, based on the steering wheel angle information S5, the information indicating the left tire steering angle selected from the steering angle conversion table T1 as the left steering angle information S1L, and the information indicating the right tire steering angle selected from the steering angle conversion table T1 as the right steering angle information S1R.

As such, when the second aspect of the steering angle detection mechanism is employed, the turning controller 15 can obtain the left steering angle information S1L and the right steering angle information S1R through execution of the steering angle recognition process.

In Step ST16 to be executed after execution of Step ST14 or Step ST15, the controllers including the steering model controller 22 and the turning controller 15 are set to a driving state.

The steering model controller 22 executes processes in Steps ST17 to ST23 included in a steering model main routine SM, and processes in Steps ST24 to ST26.

In Step ST17, the steering model controller 22 executes the turning determination process of determining whether the driving state of the vehicle 60 is a driving straight state or the turning state.

Hereinafter, the turning determination process will be described in detail. FIG. 11 illustrates processing details of the turning determination process. FIG. 11 illustrates the XYZ rectangular coordinate system. The steering model controller 22 recognizes a left steering angle θl based on the left steering angle information S1L, and recognizes a right steering angle θr based on the right steering angle information S1R. FIG. 11 illustrates the vehicle 60 in which the front-wheel tire pair turns as the first-type tire pair.

The steering model controller 22 recognizes, in advance, a wheel base WL, a front wheel tread Tf, and a rear wheel tread Tb of the vehicle 60. Furthermore, the maximum turning radius Rmax is preset as a turning radius for determination (m). The maximum turning radius Rmax is set in a range of, for example, 200 to 500 (m).

Thus, a rear-left-wheel radius for comparison Rbl0 can be calculated from the left steering angle θl using Equation (1) below, and a rear-right-wheel radius for comparison Rbr0 can be calculated from the right steering angle θr using Equation (2) below.

[Math 1]

$$Rbl0 = \frac{WL}{tan(\theta l)} + \frac{Tf - Tb}{2} \quad \cdots(1)$$

[Math 2]

$$Rbr0 = \frac{WL}{tan(\theta r)} + \frac{Tf - Tb}{2} \quad \cdots(2)$$

Each of the rear-left-wheel radius for comparison Rbl0 and the rear-right-wheel radius for comparison Rbr0 becomes a turning radius for comparison (m).

Then, the steering model controller 22 determines that the vehicle 60 is in the driving straight state when {|Rbl0| > Rmax} or {|Rbr0| > Rmax}, and determines that the vehicle 60 is in a steering/turning state when {|Rbl0| ≤ Rmax} and {|Rbr0| ≤ Rmax}.

As such, the steering model controller 22 executes the turning determination process of calculating the turning radii for comparison (Rbl0, Rbr0) based on the left steering angle information S1L and the right steering angle information S1R, and determining whether the driving state of the vehicle 60 is the steering/turning state or the driving straight state, based on comparison results between the turning radii for comparison and the turning radius for determination (Rmax) in Step ST17.

When it is determined in Step ST18 that the vehicle 60 is in the steering/turning state (YES), the processes proceed to Step ST19. When it is determined in Step ST18 that the vehicle 60 is in the driving straight state (NO), the processes proceed to Step ST24.

If YES in Step ST18, the turning control process including Steps ST19 to ST26 (except ST24) is executed. If NO in Step ST18, the driving straight control process including Steps ST24 to ST26 is executed.

FIG. 12 schematically illustrates a driving state of the vehicle 60. FIG. 12 illustrates the XYZ rectangular coordinate system. Hereinafter, the turning control process will be described with reference to FIG. 12.

First, a steering/turning center C0 is determined in Step ST19. The steering/turning center C0 is at a distance of {(Rbl0 + Rbr0)/2} from a rear-wheel center point PB on a rear-wheel base line BL. The rear-wheel base line BL is a line connecting the centers of the rear wheel tires 6 and extending in the X direction. The rear-wheel center point PB is a point located at the center between the rear wheels 6 on the rear-wheel base line BL.

Then, a steering/turning radius (m) of each of the four tires 6 from the steering/turning center C0 is calculated in Step ST20. The four steering/turning radii include a rear-left-wheel radius Rbl, a rear-right-wheel radius Rbr, a front-left-wheel radius Rfl, and a front-right-wheel radius Rfr.

First, the rear-left-wheel radius Rbl is calculated based on the turning radii for comparison (Rbl0, Rbr0) using Equation (3) below.

[Math 3]

$$Rbl = \frac{Rbl0+Rbr0}{2} - \frac{Tb}{2} \quad \cdots(3)$$

Next, the rear-right-wheel radius Rbr is calculated using Equation (4) below from the rear-left-wheel radius Rbl calculated by Equation (3).

[Math 4]

$$Rbr = Rbl + Tb \quad \cdots(4)$$

Then, the front-left-wheel radius Rfl is calculated using Equation (5) below from the rear-left-wheel radius Rbl calculated by Equation (3).

[Math 5]

$$Rfl = \sqrt{WL^2 + (Rbl - \frac{Tf-Tb}{2})^2} \quad \cdots(5)$$

Next, the front-right-wheel radius Rfr is calculated using Equation (6) below from the rear-right-wheel radius Rbr calculated by Equation (4).

[Math 6]

$$Rfr = \sqrt{WL^2 + (Rbr + \frac{Tf-Tb}{2})^2} \quad \cdots(6)$$

As such, the steering/turning radius of each of the four tires 6 from each of the steering/turning center C0 can be calculated in Step ST20 using Equations (3) to (6).

Then, rotation speeds of the four rollers are measured in Step ST21. The rotation speeds (km/h) of the four rollers include a front-left-wheel measurement speed Mfl, a front-right-wheel measurement speed Mfr, a rear-left-wheel measurement speed Mbl, and a rear-right-wheel measurement speed Mbr.

As illustrated in FIG. 7, the encoder 59L feeds back encoder information S59L on the front-left-wheel roller driving motor 58L to the motor drive 26L. The motor drive 26L feeds back front-left-wheel motor speed information PV1L indicating the front-left-wheel measurement speed Mfl of the first-type left rollers to the steering model controller 22 based on the encoder information S59L. Thus, the steering model controller 22 can recognize the rotation speed (Mfl) of the first-type left rollers with reference to the front-left-wheel motor speed information PV1L.

The encoder 59R feeds back encoder information S59R on the front-right-wheel roller driving motor 58R to the motor drive 26R. The motor drive 26R feeds back front-right-wheel motor speed information PV1R indicating the front-right wheel measurement speed Mfr to the steering model controller 22 based on the encoder information S59R. Thus, the steering model controller 22 can recognize the rotation speed (Mfr) of the first-type right rollers with reference to the front-right-wheel motor speed information PV1R.

The encoder 69L feeds back encoder information S69L on the rear-left-wheel roller driving motor 68L to the motor drive 27L. The motor drive 27L feeds back rear-left-wheel motor speed information PV2L indicating the rear-left wheel measurement speed Mbl of the second-type left rollers to the steering model controller 22 based on the encoder information S69L. Thus, the steering model controller 22 can recognize the rotation speed (Mbl) of the second-type left rollers with reference to the rear-left-wheel motor speed information PV2L.

The encoder 69R feeds back encoder information S69R on the rear-right-wheel roller driving motor 68R to the motor drive 27R. The motor drive 27R feeds back rear-right-wheel motor speed information PV2R indicating the rear-right wheel measurement speed Mbr of the second-type right rollers to the steering model controller 22 based on the encoder information S69R. Thus, the steering model controller 22 can recognize the rotation speed (Mbr) of the second-type right rollers with reference to the rear-right-wheel motor speed information PV2R.

Then, a reference speed Vd (km/h) and a reference turning radius Rd (m) are calculated in Step ST22. The reference speed Vd is calculated from Equation (7) below. The reference turning radius Rd is calculated from Equation (8) below.

[Math 7]

$$Vd = \frac{Mfl + Mfr + Mbl + Mbr}{4} \quad \cdots (7)$$

[Math 8]

$$Rd = \frac{Rfl + Rfr + Rbl + Rbr}{4} \cdots (8)$$

Next in Step ST23, each of control target speeds (km/h) of the four rollers is calculated, based on the reference speed Vd and the reference turning radius Rd obtained in Step ST22. The four control target speeds include a front-left-wheel target speed Vfl, a front-right-wheel target speed Vfr, a rear-left-wheel target speed Vbl, and a rear-right-wheel target speed Vbr.

The front-left-wheel target speed Vfl is calculated by substituting the front-left-wheel radius Rfl into Equation (9) below. The front-right-wheel target speed Vfr is calculated by substituting the front-right-wheel radius Rfr into Equation (10) below.

[Math 9]

$$Vfl = \frac{Rfl \cdot Vd}{Rd} \quad \cdots (9)$$

[Math 10]

$$Vfr = \frac{Rfr \cdot Vd}{Rd} \quad \cdots (10)$$

Similarly, the rear-left-wheel target speed Vbl is calculated by substituting the rear-left-wheel radius Rbl into Equation (11) below. The rear-right-wheel target speed Vbr is calculated by substituting the rear-right-wheel radius Rbr into Equation (12) below.

[Math 11]

$$Vbl = \frac{Rbl \cdot Vd}{Rd} \quad \cdots (11)$$

[Math 12]

$$Vbr = \frac{Rbr \cdot Vd}{Rd} \quad \cdots (12)$$

In Step ST25 to be executed after Step ST23, the steering model controller 22 splits a motor torque so that the four rollers are rotationally driven at the four control target speeds (km/h) that are different speeds.

Then in Step ST26, the steering model controller 22 outputs four roller driving commands based on details of the motor torque split in Step ST25.

The four roller driving commands include a front-left-wheel motor torque command SL1L, a front-right-wheel motor torque command SL1R, a rear-left-wheel motor torque command SL2L, and a rear-right-wheel motor torque command SL2R.

The steering model controller 22 outputs the front-left-wheel motor torque command SL1L to the motor drive 26L. The motor drive 26L drives the front-left-wheel roller driving motor 58L to achieve the front-left-wheel target speed Vfl in accordance with the front-left-wheel motor torque command SL1L. Consequently, the front-left-wheel roller driving motor 58L rotationally drives the first-type left rollers at the front-left-wheel target speed Vfl. When the motor drive 26L performs a process of driving the front-left-wheel roller driving motor 58L, the encoder 59L feeds back the encoder information S59L to the motor drive 26L.

The steering model controller 22 outputs the front-right-wheel motor torque command SL1R to the motor drive 26R. The motor drive 26R drives the front-right-wheel roller driving motor 58R to achieve the front-right-wheel target speed Vfr in accordance with the front-right-wheel motor torque command SL1R. Consequently, the front-right-wheel roller driving motor 58R rotationally drives the first-type right rollers at the front-right-wheel target speed Vfr. When the motor drive 26R performs a process of driving the front-right-wheel roller driving motor 58R, the encoder 59R feeds back the encoder information S59R to the motor drive 26R.

The steering model controller 22 outputs the rear-left-wheel motor torque command SL2L to the motor drive 27L. The motor drive 27L drives the rear-left-wheel roller driving motor 68L to achieve the rear-left-wheel target speed Vbl in accordance with the rear-left-wheel motor torque command SL2L. Consequently, the rear-left-wheel roller driving motor 68L rotationally drives the second-type left rollers at the rear-left-wheel target speed Vbl. When the motor drive 27L performs a process of driving the rear-left-wheel roller driving motor 68L, the encoder 69L feeds back the encoder information S69L to the motor drive 27L.

The steering model controller 22 outputs the rear-right-wheel motor torque command SL2R to the motor drive 27R. The motor drive 27R drives the rear-right-wheel roller driving motor 68R to achieve the rear-right-wheel target speed Vbr in accordance with the rear-right-wheel motor torque command SL2R. Consequently, the rear-right-wheel roller driving motor 68R rotationally drives the second-type right rollers at the rear-right-wheel target speed Vbr. When the motor drive 27R performs a process of driving the rear-right-wheel roller driving motor 68R, the encoder 69R feeds back the encoder information S69R to the motor drive 27R.

As such, the steering model controller 22 finally executes the turning control process as the roller control process of outputting the four roller driving commands (SL1L, SL1R, SL2L, and SL2R).

An aspect of appropriately changing the elements of Equation (7) and Equation (8) for calculating the reference speed Vd and the reference turning radius Rd, respectively, according to specifications of the vehicle 60 is conceivable as a modification of Step ST22.

Next, the driving straight control process including Steps ST24 to ST26 to be executed if NO in Step ST18 will be described.

In Step ST24, the control target speeds (km/h) of the four rollers are set to the same common speed. In other words, the front-left-wheel target speed Vfl, the front-right-wheel target speed Vfr, the rear-left-wheel target speed Vbl, and the rear-right-wheel target speed Vbr are set to the same common speed.

In Step ST25 to be executed after Step ST24, the steering model controller 22 splits the motor torque so that the four rollers are rotationally driven at the four control target speeds.

Then in Step ST26, the steering model controller 22 outputs the four roller driving commands based on the details of the motor torque split in Step ST25.

As such, the steering model controller 22 finally executes the driving straight control process as the roller control process of outputting the four roller driving commands (SL1L, SL1R, SL2L, and SL2R).

As described above, the steering model controller 22 executes the turning control process including Steps ST19 to ST26 (except ST24) as the roller control process in turning determination of determining that the driving state of the vehicle 60 is the steering/turning state.

The steering model controller 22 executes the driving straight control process including Steps ST24 to ST26 as the roller control process in the driving straight determination of determining that the driving state of the vehicle 60 is the driving straight state. Thus, the roller control process to be executed under control of the steering model controller 22 includes the turning control process and the driving straight control process.

Then, in response to the roller control process, the roller driving mechanism DM1 executes the roller driving process of rotationally driving the four rollers, based on the four roller driving commands (SL1L, SL1R, SL2L, and SL2R) corresponding to the four rollers.

FIG. 13 is a flowchart illustrating a procedure of a method of controlling turning of the roller turning mechanism 3 under control of the turning controller 15.

With reference to FIG. 13, the turning controller 15 receives the steering angle information S1 from the steering angle detection mechanism of the first aspect or the second aspect in Step ST31. The steering angle information S1 includes the left steering angle information S1L and the right steering angle information S1R.

Then in Step ST32, the turning controller 15 outputs the steering angle instruction information SG indicating the steering angle (a left steering angle or a right steering angle) calculated in Step ST31 to the motor drive 19.

Next in Step ST33, the motor drive 19 performs motor control of outputting the driving control signal S19 to the turning motor 42 to cause the roller turning mechanism 3 to execute the roller turning operation.

Here, the roller turning mechanism 3 executes the roller turning operation so that the turning structure 31 turns at the turning angle corresponding to the steering angle indicated by the steering angle instruction information SG.

Thus, the turning controller 15 that is a roller turning controller executes a roller turning process illustrated in FIG. 13 by outputting the steering angle instruction information SG. This roller turning process is a process of causing the roller turning mechanism 3 to perform the roller turning operation so that the roller pair 20 and the tire 6 have a predetermined geometry.

The roller turning mechanisms 3 include the roller turning mechanisms 3L and 3R. The motor drives 19 include the motor drive 19L for the roller turning mechanism 3L and the motor drive 19R for the roller turning mechanism 3R. Furthermore, the turning motors 42 include the turning motor 42L for the roller turning mechanism 3L and the turning motor 42R for the roller turning mechanism 3R.

Thus, the roller turning process by the roller turning mechanism 3L can turnably drive the first-type left rollers so that a left geometry between the first-type left rollers and the first-type left tire becomes a predetermined geometry.

Similarly, the roller turning process by the roller turning mechanism 3R can turnably drive the first-type right rollers so that a right geometry between the first-type right rollers and the first-type right tire becomes a predetermined geometry.

The processes to be performed under control of the turning controller 15 which include Steps ST31 to ST33 in FIG. 13 are performed in parallel with the processes to be performed under control of the steering model controller 22 which include Steps ST10 to ST26 in FIGS. 9 and 10.

[Advantages]

The chassis dynamometer 1 according to the embodiment 1 includes the roller driving control mechanism including the dynamo control apparatus 75, the left displacement sensor 7L, the right displacement sensor 7R, the steering wheel angle sensor 5, and the roller driving mechanism DM1 in FIG. 7.

The roller driving control mechanism in the chassis dynamometer 1 according to the embodiment executes the roller driving control processing of rotationally driving the four rollers based on the steering angle information S1L and the right steering angle information S1R so that the four rollers adapt to the driving state of the vehicle 60 (the steering/turning state or the driving straight state). As described above, the roller driving control processing includes the steering angle recognition process, the turning determination process, the roller driving process, and the roller control process (the turning control process and the driving straight control process).

Thus, the chassis dynamometer 1 according to the embodiment can conduct a driving test on the vehicle 60 with high accuracy even when the driving state of the vehicle 60 is the steering/turning state.

The steering model controller 22 in the chassis dynamometer 1 according to the embodiment executes the turning determination process including Steps ST17 and ST18 in FIG. 10, so that the driving state of the vehicle 60 can be determined to be the steering/turning state or the driving straight state with high accuracy.

Consequently, the chassis dynamometer 1 according to the embodiment executes the roller control process according to processing details changed depending on whether the vehicle 60 is in the steering/turning state or the driving straight state, so that the chassis dynamometer 1 can conduct the driving test on the vehicle 60 with high accuracy.

The chassis dynamometer 1 according to the embodiment includes the steering model controller 22 that executes the roller control process of outputting the four roller driving commands, and the roller driving mechanism DM1 that executes the roller driving process of rotationally driving the four rollers, based on the four roller driving commands.

Thus, the chassis dynamometer 1 according to the embodiment can rotationally drive the four rollers with high accuracy so that the four rollers adapt to the driving state of the vehicle 60 under control of the steering model controller 22 and under drive of the roller driving mechanism DM1.

The steering model controller 22 in the chassis dynamometer 1 according to the embodiment executes the turning control process including Steps ST19 to ST26 (except ST24), so that the steering model controller 22 can output the four roller driving commands at which the four rollers adapt to the steering/turning state of the vehicle 60 and are rotationally driven with high accuracy.

The steering model controller 22 in the chassis dynamometer 1 according to the embodiment executes the driving straight control process including Steps ST24 to ST26, so that the steering model controller 22 can relatively easily output the four roller driving commands at which the four rollers adapt to the driving straight state of the vehicle 60 and are rotationally driven with high accuracy.

The chassis dynamometer 1 according to the embodiment employs the left displacement sensor 7L and the right displacement sensor 7R as the first aspect of the steering angle detection mechanism.

Since the left displacement sensor 7L uses the measurement target region (distance measurement region 90) in the first-type left tire as a detection target, the left displacement sensor 7L can detect the left tire turning angle with high accuracy. Similarly, since the right displacement sensor 7R uses the measurement target region in the first-type right tire as a detection target, the right displacement sensor 7R can detect the right tire turning angle with high accuracy.

Consequently, the chassis dynamometer 1 according to the embodiment can conduct a driving test on the vehicle 60 with high accuracy using the first aspect of the steering angle detection mechanism, even when the driving state of the vehicle 60 is the steering/turning state.

The chassis dynamometer 1 according to the embodiment employs the steering angle recognition process to be performed by the steering wheel angle sensor 5, the steering angle conversion table T1, and the steering model controller 22 as the second aspect of the steering angle detection mechanism.

Thus, the steering model controller 22 in the chassis dynamometer 1 can execute the steering angle recognition process with reference to the steering angle conversion table T1 based on the steering wheel angle information S5. Even in the presence of disturbing noise such as inflation of the tire 6, the chassis dynamometer 1 according to the embodiment can recognize, as the left steering angle information S1L and the right steering angle information S1R, information indicating the accurate left tire steering angle and information indicating the accurate right tire steering angle corresponding to the left tire turning angle and the right tire turning angle, respectively, .

The roller turning mechanism 3 in the chassis dynamometer 1 according to the embodiment can execute the roller turning process in synchronization with the left steering angle information S1L and the right steering angle information S1R with high accuracy so that each of the aforementioned left geometry and right geometry becomes the predetermined geometry.

The left geometry is a geometry between the first-type left rollers and the first-type left tire, and the right geometry is a geometry between the first-type right rollers and the first-type right tire.

[Method of controlling chassis dynamometer 1]

The procedures illustrated in FIGS. 9 and 10 are executed as a method of controlling the chassis dynamometer 1 in this embodiment.

In other words, the method of controlling the chassis dynamometer 1 according to the embodiment includes the following Steps (X) and (Y).

Step (X): executing the turning determination process of calculating the turning radii for comparison (m) based on the left steering angle information S1L and the right steering angle information S1R, and determining whether the driving state of the vehicle 60 is the steering/turning state or the driving straight state, based on comparison results between the turning radii for comparison and the turning radius for determination (m).

For example, the rear-left-wheel radius for comparison Rbl0 calculated by Equation (1) or the rear-right-wheel radius for comparison Rbr0 calculated by Equation (2) is conceivable as the turning radius for comparison. Furthermore, the maximum turning radius Rmax is conceivable as the turning radius for determination. Step (X) is a process corresponding to Steps ST17 and ST18 in FIG. 10.

Step (Y): executing the turning control process in the turning determination of determining, through Step (X), that the driving state of the vehicle 60 is the steering/turning state.

Step (Y) corresponds to the processes in Steps ST19 to ST26 except ST24 in FIG. 10.

The turning control process of Step (Y) includes the following Steps (a) to (d).

Step (a): calculating the four steering/turning radii (m) that are steering/turning radii of the four tires 60.

The four steering/turning radii include the rear-left-wheel radius Rbl calculated using Equation (3), the rear-right-wheel radius Rbr calculated using Equation (4), the front-left-wheel radius Rfl calculated using Equation (5), and the front-right-wheel radius Rfr calculated using Equation (6).

Step (b): measuring the four roller rotation speeds (km/h) that are rotation speeds of the four rollers.

The four roller rotation speeds include the front-left-wheel measurement speed Mfl, the front-right-wheel measurement speed Mfr, the rear-left-wheel measurement speed Mbl, and the rear-right-wheel measurement speed Mbr.

Step (c): calculating the four control target speeds (km/h) that are control target speeds of the four rollers, based on the four steering/turning radii and the four roller rotation speeds.

The four control target speeds include the front-left-wheel target speed Vfl, the front-right-wheel target speed Vfr, the rear-left-wheel target speed Vbl, and the rear-right-wheel target speed Vbr.

Step (d): outputting the four roller driving commands to the roller driving mechanism DM1 based on the four tire target speeds.

The four roller driving commands include the front-left-wheel motor torque command SL1L, the front-right-wheel motor torque command SL1R, the rear-left-wheel motor torque command SL2L, and the rear-right-wheel motor torque command SL2R.

Step (a) is a process corresponding to Step ST20 in FIG. 10, and Step (b) is a process corresponding to Step ST21 in FIG. 10. Furthermore, Step (c) is a process corresponding to Steps ST22 and ST23 in FIG. 10, and Step (d) is a process corresponding to Steps ST25 and ST26 in FIG. 10.

In the method of controlling the chassis dynamometer 1 according to the embodiment, the turning control process of Step (Y) including Steps (a) to (d) is executed to output the four roller driving commands to the roller driving mechanism DM1. Thus, the chassis dynamometer 1 can output, with high accuracy, the four roller driving commands at which the four rollers adapt to the steering/turning state of the vehicle 60 and are rotationally driven.

[Others]

Although the first-type tire pair is the front-wheel tire pair and the second-type tire pair is the rear-wheel tire pair in this embodiment, for example, a modification in which the first-type tire pair is the rear-wheel tire pair, the second-type tire pair is the front-wheel tire pair, the left steering angle θl and the right steering angle θr are to be detected from the rear-wheel tire pair, and the roller turning mechanism 3 and the displacement sensor 7 are disposed closer to each of the rear wheels is possible.

Although the embodiment above describes the roller pair 20 with a twin-roller structure as rollers on which the tire 6 of the vehicle 60 is placed, a discrete roller with a single roller structure may be used instead of the roller pair 20.

Although the present disclosure is described in detail, the foregoing description is in all aspects illustrative and does not restrict the disclosure. Therefore, numerous modifications and variations that have not yet been exemplified can be devised without departing from the scope of the present disclosure.

EXPLANATION OF REFERENCE SIGNS

1 chassis dynamometer
3, 3L, 3R roller turning mechanism
5 steering wheel angle sensor
6, 6L, 6R tire
7 displacement sensor
7L left displacement sensor
7R right displacement sensor
9, 91 to 98 measurement point
15 turning controller
19, 19L, 19R, 26L, 26R, 27L, 27R motor drive
20 roller pair
20B rear roller
20F front roller
22 steering model controller
32, 32L, 32R turning platform
42, 42L, 42R turning motor
55, 59L, 59R, 69L, 69R encoder
58L front-left-wheel roller driving motor
58R front-right-wheel roller driving motor
60 vehicle
68L rear-left-wheel roller driving motor
68R rear-right-wheel roller driving motor
75 dynamo control apparatus
DM1 roller driving mechanism
T1 steering angle conversion table

## Claims

1. A chassis dynamometer including four rollers on which four tires of a vehicle are placed, the four tires including a front-wheel tire pair and a rear-wheel tire pair, one of the front-wheel tire pair and the rear-wheel tire pair being defined as a first-type tire pair, and the other of the front-wheel tire pair and the rear-wheel tire pair being defined as a second-type tire pair, the first-type tire pair including a first-type left tire and a first-type right tire that are disposed at both sides, the second-type tire pair including a second-type left tire and a second-type right tire that are disposed at both sides, the four rollers including a first-type left roller on which the first-type left tire is placed, a first-type right roller on which the first-type right tire is placed, a second-type left roller on which the second-type left tire is placed, and a second-type right roller on which the second-type right tire is placed,
the chassis dynamometer comprising:

    a steering angle detection mechanism detecting left steering angle information indicating a left tire turning angle that is an angle of the first-type left tire with respect to a reference direction, and detecting right steering angle information indicating a right tire turning angle that is an angle of the first-type right tire with respect to the reference direction; and
    a roller driving control mechanism executing roller driving control processing of rotationally driving the four rollers so that the rollers adapt to a driving state of the vehicle.

2. The chassis dynamometer according to claim 1, wherein

    the roller driving control mechanism includes a steering model controller executing a turning determination process,
    the roller driving control processing includes the turning determination process, and
    the turning determination process is a process of calculating turning radii for comparison based on the left steering angle information and the right steering angle information, and determining whether the driving state of the vehicle is a steering/turning state or a driving straight state, based on comparison results between the turning radii for comparison and a turning radius for determination.

3. The chassis dynamometer according to claim 2, wherein

    the roller driving control mechanism includes a roller driving mechanism executing a roller driving process of rotationally driving the four rollers, based on four roller driving commands corresponding to the four rollers,
    the steering model controller executes a roller control process of outputting the four roller driving commands, and
    the roller driving control processing includes the roller driving process and the roller control process.

4. The chassis dynamometer according to claim 3, wherein

    the steering model controller executes a turning control process in turning determination of determining, through the turning determination process, that the driving state of the vehicle is the steering/turning state,
    the roller control process includes the turning control process, and
    the turning control process includes the steps of:

        (a) calculating four steering/turning radii that are steering/turning radii of the four tires;
        (b) measuring four roller rotation speeds that are rotation speeds of the four rollers;
        (c) calculating four control target speeds corresponding to the four rollers, based on the four steering/turning radii and the four roller rotation speeds; and
        (d) outputting the four roller driving commands based on the four control target speeds.

5. The chassis dynamometer according to claim 3, wherein

    the steering model controller executes a driving straight control process in driving straight determination of determining, through the turning determination process, that the driving state of the vehicle is the driving straight state,
    the roller control process includes the driving straight control process, and
    the driving straight control process includes the steps of:

        (a) setting four control target speeds corresponding to the four rollers to a same common speed; and

(b) outputting the four roller driving commands based on the four control target speeds.

**6.** The chassis dynamometer according to any one of claims 1 to 5, wherein the steering angle detection mechanism includes:

a left displacement sensor detecting the left tire turning angle of the first-type left tire, using a measurement target region of the first-type left tire as a detection target to obtain the left steering angle information; and
a right displacement sensor detecting the right tire turning angle of the first-type right tire, using a measurement target region of the first-type right tire as a detection target to obtain the right steering angle information.

**7.** The chassis dynamometer according to any one of claims 2 to 5, wherein the steering angle detection mechanism includes:

the steering model controller;
a steering wheel angle sensor detecting a steering wheel angle during a steering operation of the vehicle to obtain steering wheel angle information indicating the detected steering wheel angle; and
a steering angle conversion table having angle pair information of multiple types,
the angle pair information of multiple types is information indicating left tire steering angles of multiple types and right tire steering angles of multiple types, in a format corresponding to steering wheel angles of multiple types, each of the left tire steering angles of multiple types corresponding to the left tire turning angle, each of the right tire steering angles of multiple types corresponding to the right tire turning angle,
the steering model controller executes a steering angle recognition process of recognizing the left steering angle information and the right steering angle information, and
the steering angle recognition process is a process of selecting a left tire steering angle and a right tire steering angle which correspond to the steering wheel angle indicated by the steering wheel angle information, from among the left tire steering angles of multiple types and the right tire steering angles of multiple types, respectively, with reference to the steering angle conversion table, and recognizing information indicating the selected left tire steering angle and information indicating the selected right tire steering angle as the left steering angle information and the right steering angle information, respectively.

**8.** The chassis dynamometer according to any one of claims 1 to 7, further comprising

a roller turning mechanism executing a roller turning process of turnably driving each of the first-type left roller and the first-type right roller based on a corresponding one of the left steering angle information and the right steering angle information, wherein
the roller turning process is a process of turnably driving the first-type left roller and the first-type right roller so that a left geometry between the first-type left roller and the first-type left tire and a right geometry between the first-type right roller and the first-type right tire become respective predetermined geometries.

**9.** A method of controlling a chassis dynamometer including four rollers on which four tires of a vehicle are placed, the four tires including a front-wheel tire pair and a rear-wheel tire pair, one of the front-wheel tire pair and the rear-wheel tire pair being defined as a first-type tire pair, and the other of the front-wheel tire pair and the rear-wheel tire pair being defined as a second-type tire pair, the first-type tire pair including a first-type left tire and a first-type right tire that are disposed at both sides, the second-type tire pair including a second-type left tire and a second-type right tire that are disposed at both sides, the four rollers including a first-type left roller on which the first-type left tire is placed, a first-type right roller on which the first-type right tire is placed, a second-type left roller on which the second-type left tire is placed, and a second-type right roller on which the second-type right tire is placed, the four rollers being rotationally driven based on four roller driving commands, the chassis dynamometer including a steering angle detection mechanism detecting left steering angle information indicating a left tire turning angle that is an angle of the first-type left tire with respect to a reference direction, and detecting right steering angle information indicating a right tire turning angle that is an angle of the first-type right tire with respect to the reference direction,

the method comprising the steps of:

(X) executing a turning determination process of calculating turning radii for comparison based on the left steering angle information and the right steering angle information, and determining whether a driving state of the vehicle is a steering/turning state or a driving straight state, based on comparison results between the turning radii for comparison and a turning radius for determination; and

(Y) executing a turning control process in turning determination of determining, through the step (X), that the driving state of the vehicle is the steering/turning state,

the turning control process to be executed in the step (Y) and comprising the steps of:

(a) calculating four steering/turning radii that are steering/turning radii of the four tires;
(b) measuring four roller rotation speeds that are rotation speeds of the four rollers;
(c) calculating four control target speeds that are control target speed of the four rollers, based on the four steering/turning radii and the four roller rotation speeds; and
(d) outputting the four roller driving commands based on the four control target speeds.

F I G. 1

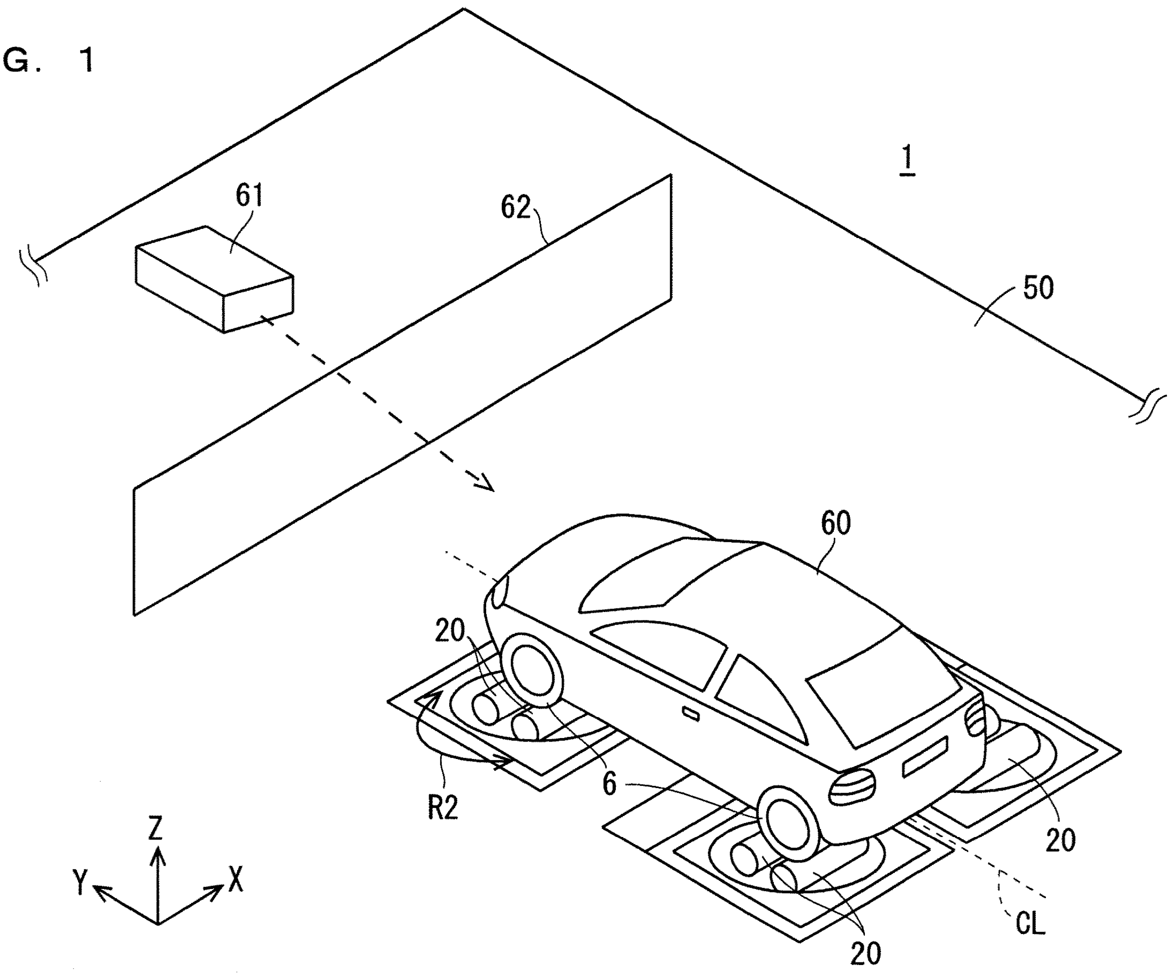

F I G. 2

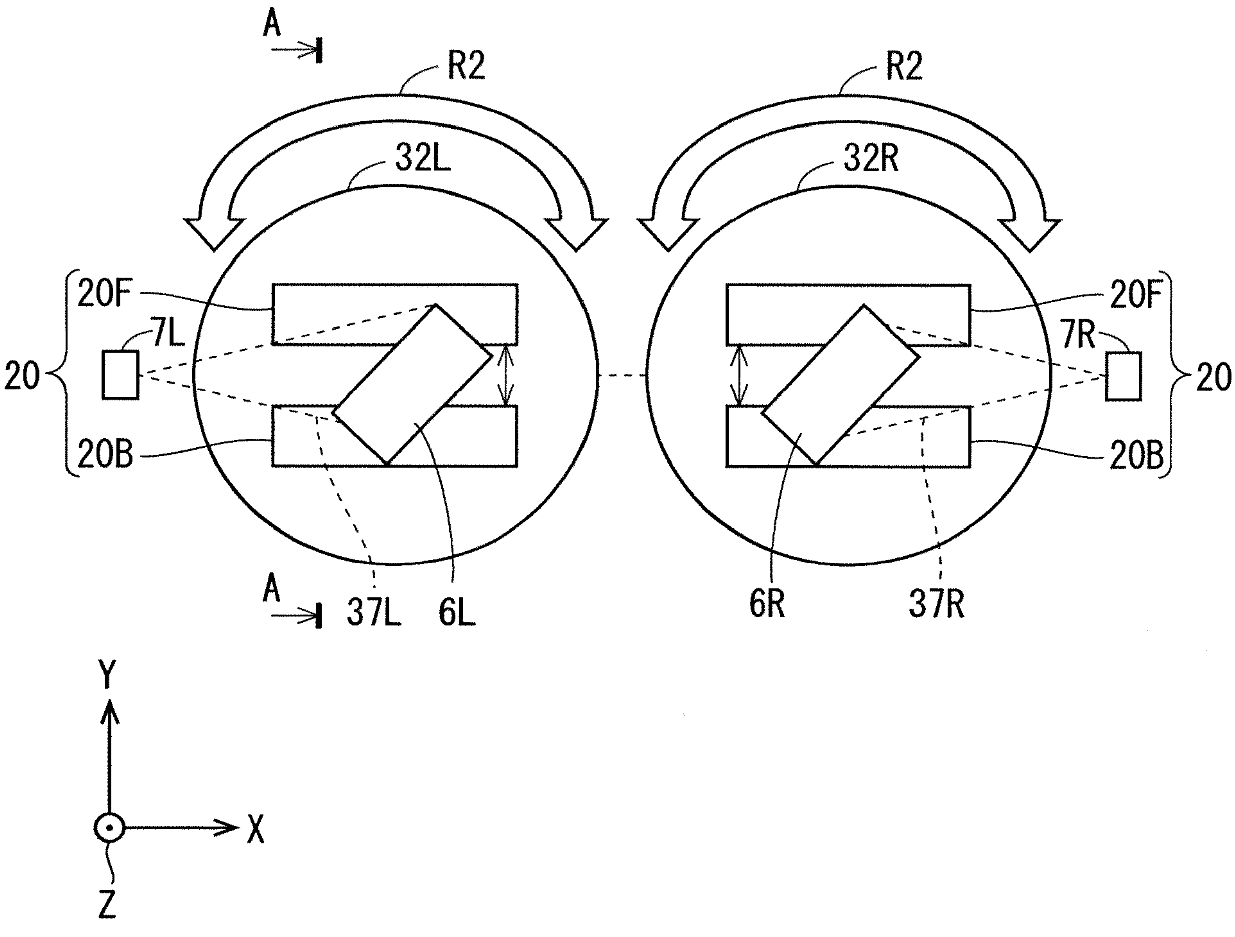

FIG. 3

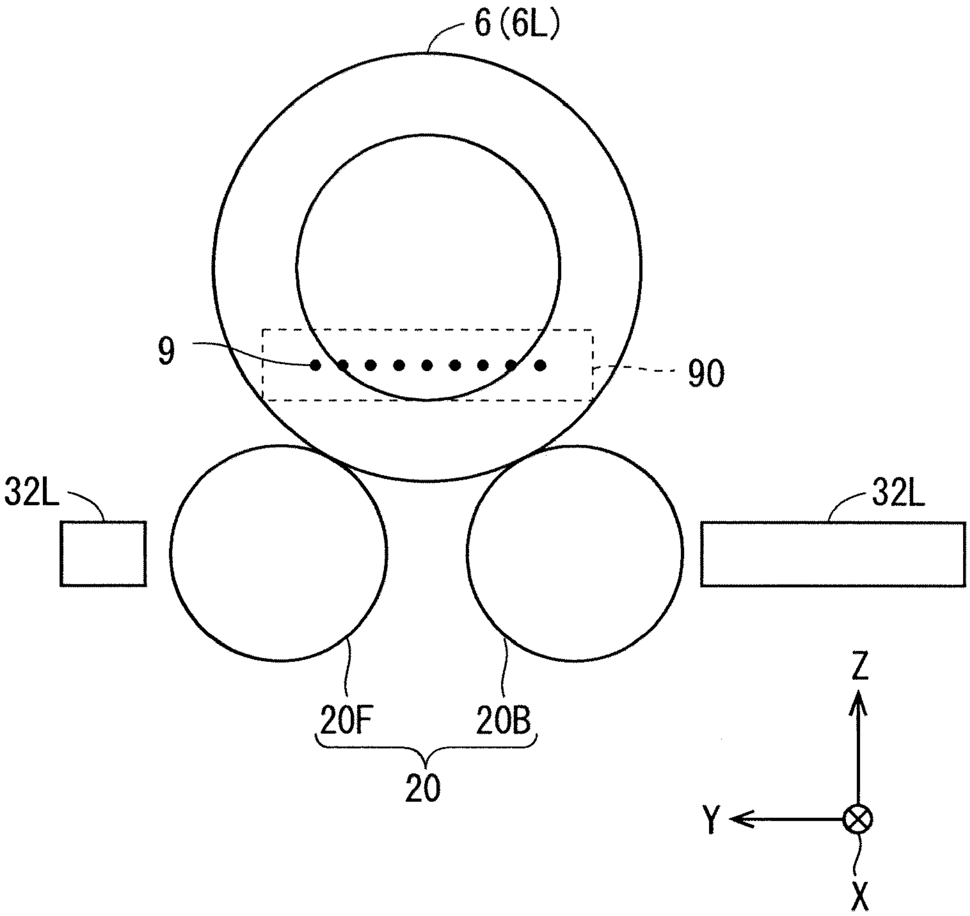

F I G. 4

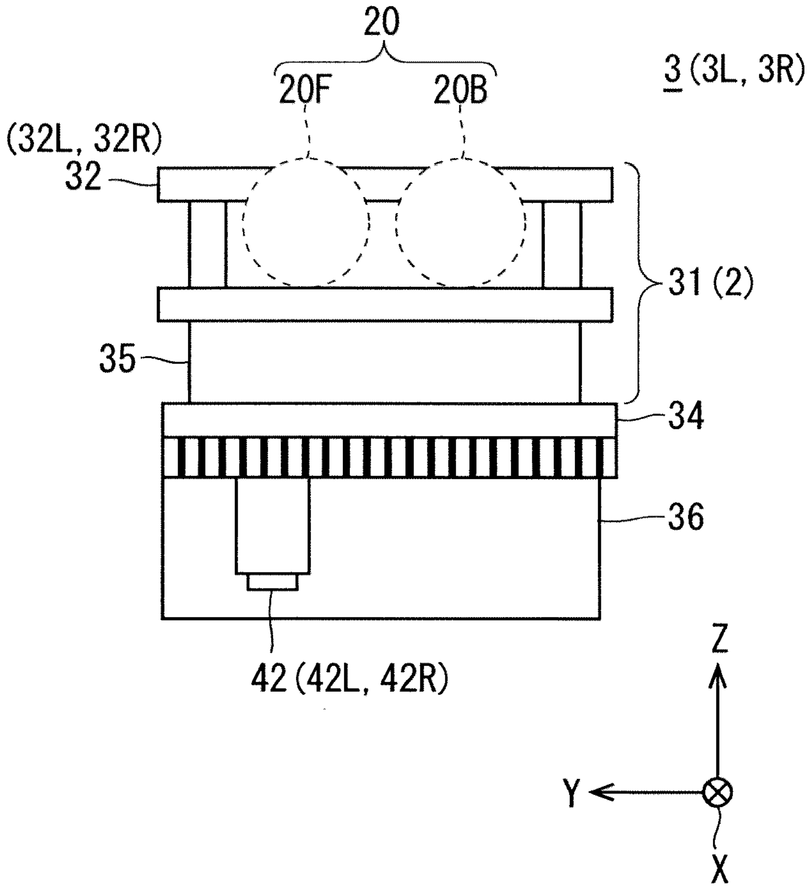

FIG. 5

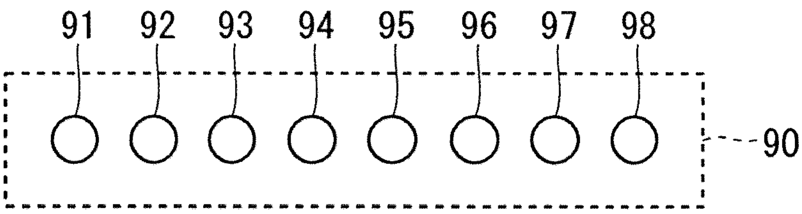

F I G. 6

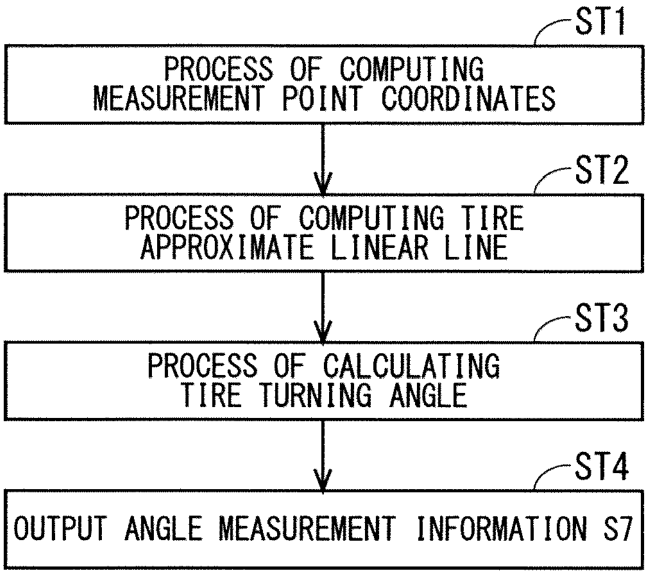
ST1
PROCESS OF COMPUTING MEASUREMENT POINT COORDINATES
ST2
PROCESS OF COMPUTING TIRE APPROXIMATE LINEAR LINE
ST3
PROCESS OF CALCULATING TIRE TURNING ANGLE
ST4
OUTPUT ANGLE MEASUREMENT INFORMATION S7

FIG. 7

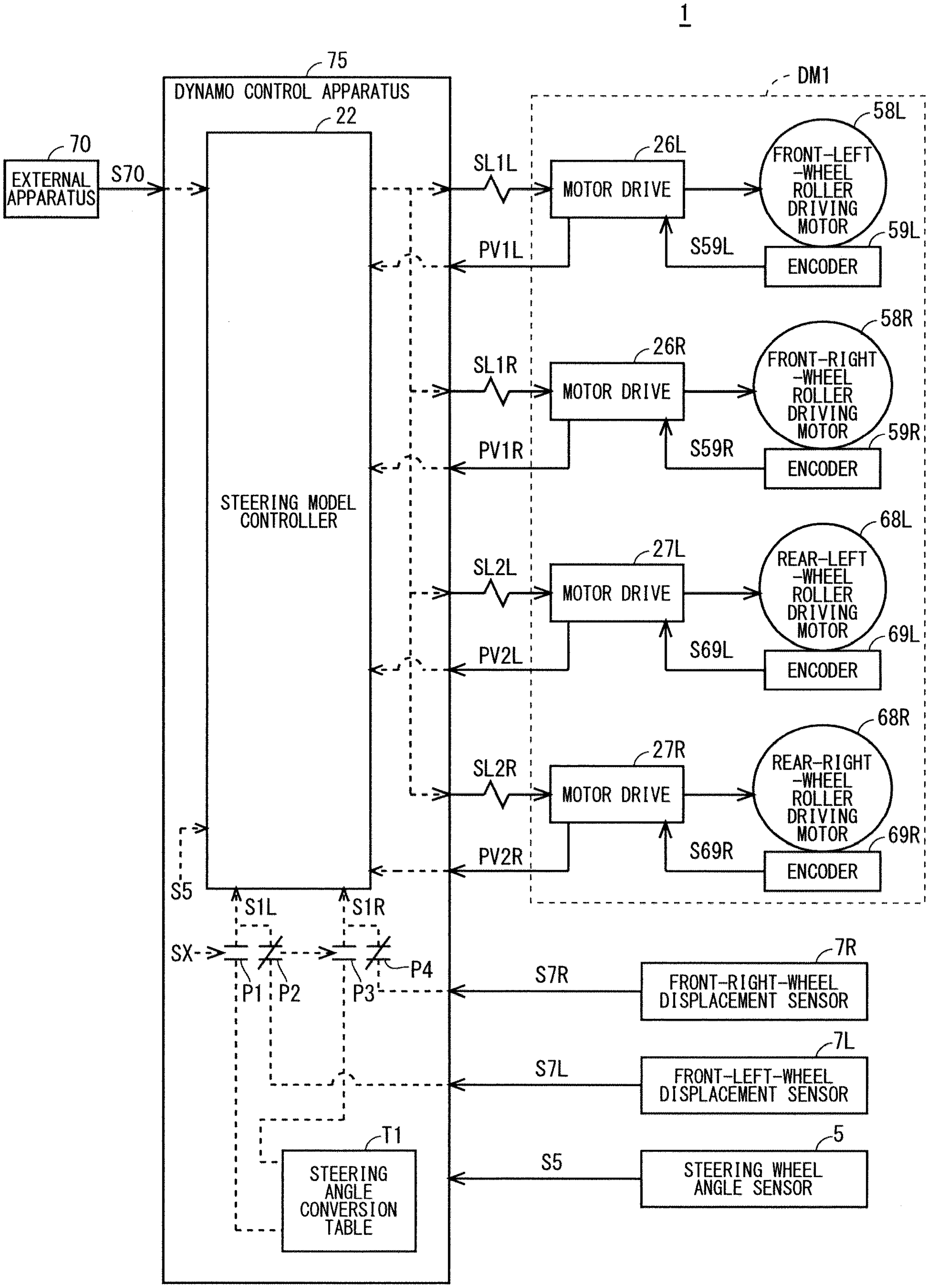
1
75
DYNAMO CONTROL APPARATUS
22
STEERING MODEL CONTROLLER
70
EXTERNAL APPARATUS
S70
DM1
26L
MOTOR DRIVE
58L
FRONT-LEFT-WHEEL ROLLER DRIVING MOTOR
59L
ENCODER
SL1L
PV1L
S59L
26R
MOTOR DRIVE
58R
FRONT-RIGHT-WHEEL ROLLER DRIVING MOTOR
59R
ENCODER
SL1R
PV1R
S59R
27L
MOTOR DRIVE
68L
REAR-LEFT-WHEEL ROLLER DRIVING MOTOR
69L
ENCODER
SL2L
PV2L
S69L
27R
MOTOR DRIVE
68R
REAR-RIGHT-WHEEL ROLLER DRIVING MOTOR
69R
ENCODER
SL2R
PV2R
S69R
S5
S1L
S1R
SX
P1
P2
P3
P4
S7R
7R
FRONT-RIGHT-WHEEL DISPLACEMENT SENSOR
S7L
7L
FRONT-LEFT-WHEEL DISPLACEMENT SENSOR
T1
STEERING ANGLE CONVERSION TABLE
S5
5
STEERING WHEEL ANGLE SENSOR

FIG. 8

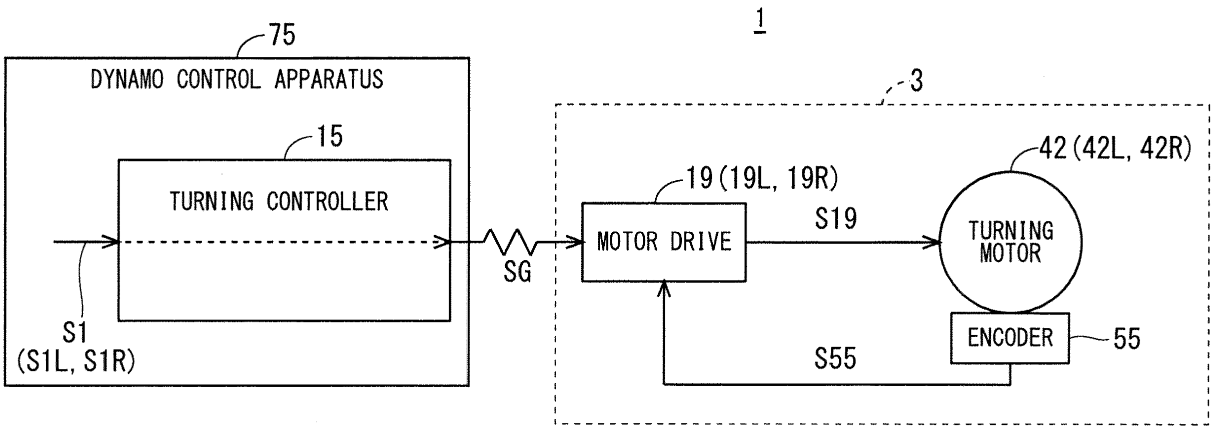
1
75
DYNAMO CONTROL APPARATUS
15
TURNING CONTROLLER
S1
(S1L, S1R)
SG
3
19 (19L, 19R)
MOTOR DRIVE
S19
42 (42L, 42R)
TURNING MOTOR
ENCODER
55
S55

F I G. 9

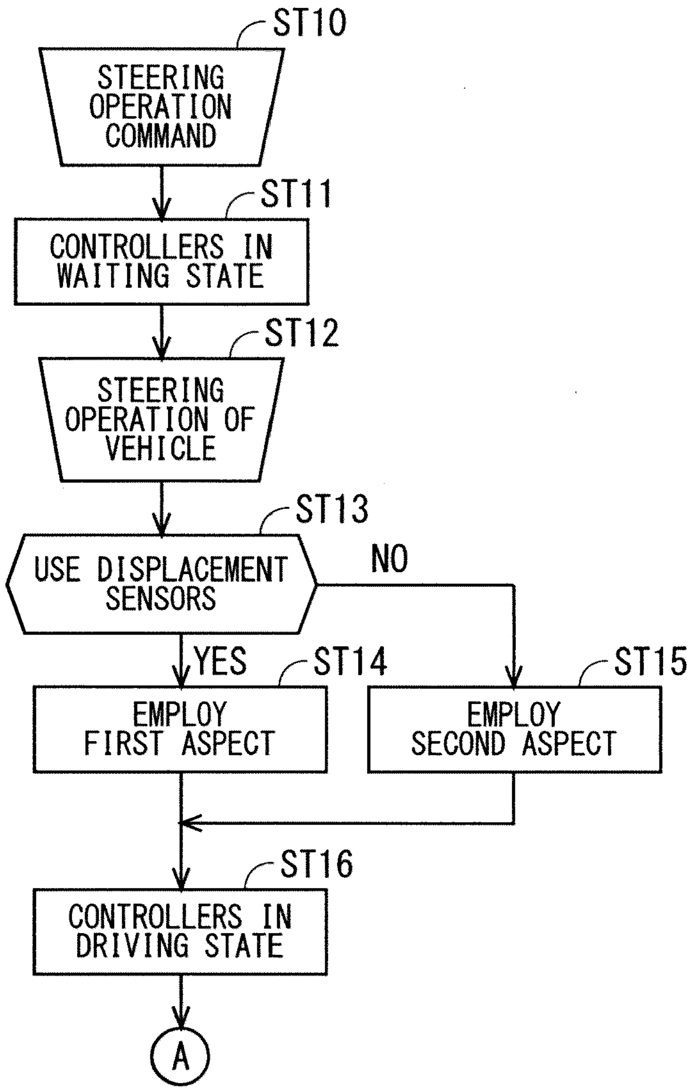
ST10
STEERING OPERATION COMMAND
ST11
CONTROLLERS IN WAITING STATE
ST12
STEERING OPERATION OF VEHICLE
ST13
USE DISPLACEMENT SENSORS
NO
YES
ST14
EMPLOY FIRST ASPECT
ST15
EMPLOY SECOND ASPECT
ST16
CONTROLLERS IN DRIVING STATE
A

FIG. 10

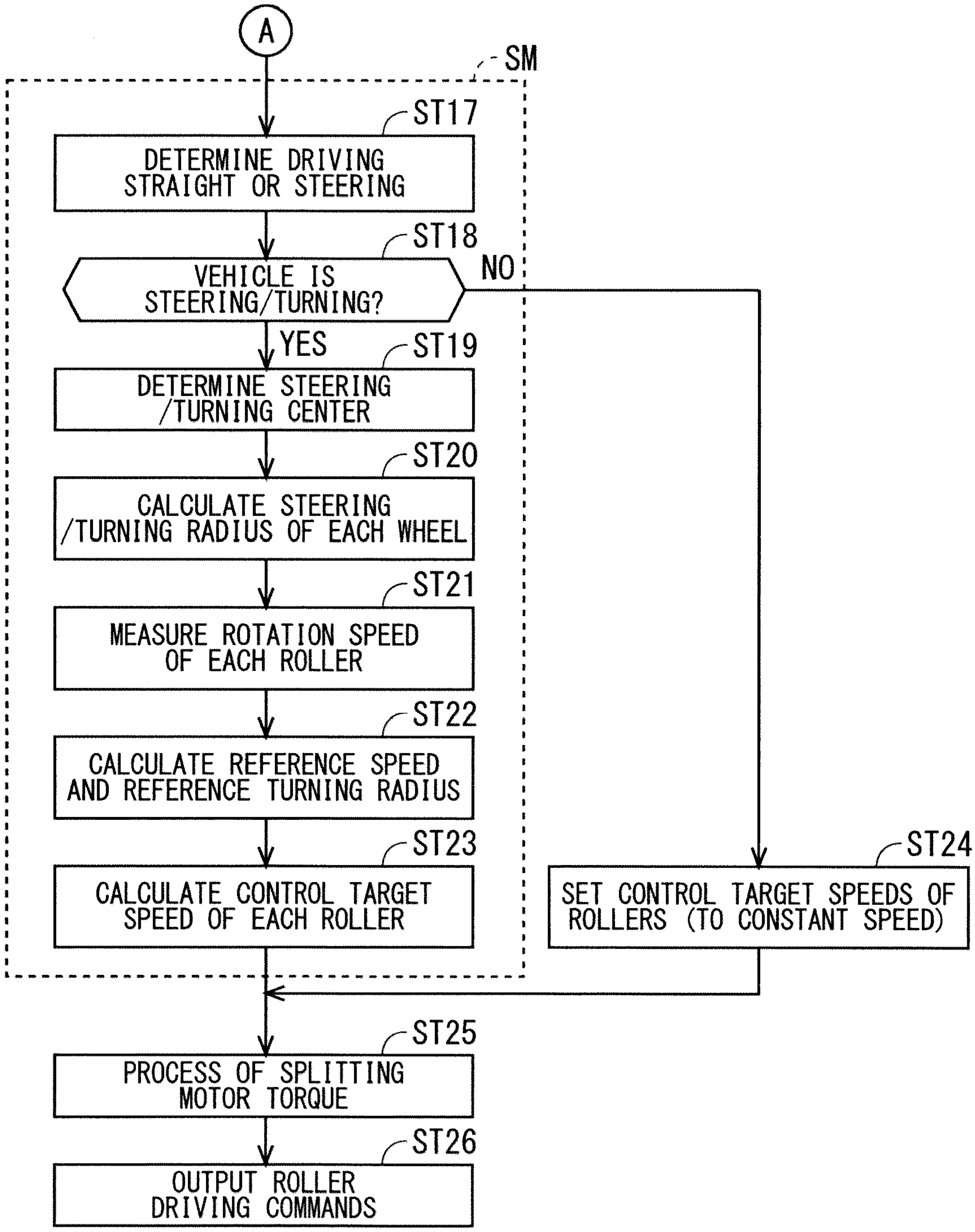
A
SM
ST17
DETERMINE DRIVING STRAIGHT OR STEERING
ST18
VEHICLE IS STEERING/TURNING?
NO
YES
ST19
DETERMINE STEERING /TURNING CENTER
ST20
CALCULATE STEERING /TURNING RADIUS OF EACH WHEEL
ST21
MEASURE ROTATION SPEED OF EACH ROLLER
ST22
CALCULATE REFERENCE SPEED AND REFERENCE TURNING RADIUS
ST23
CALCULATE CONTROL TARGET SPEED OF EACH ROLLER
ST24
SET CONTROL TARGET SPEEDS OF ROLLERS (TO CONSTANT SPEED)
ST25
PROCESS OF SPLITTING MOTOR TORQUE
ST26
OUTPUT ROLLER DRIVING COMMANDS

FIG. 11

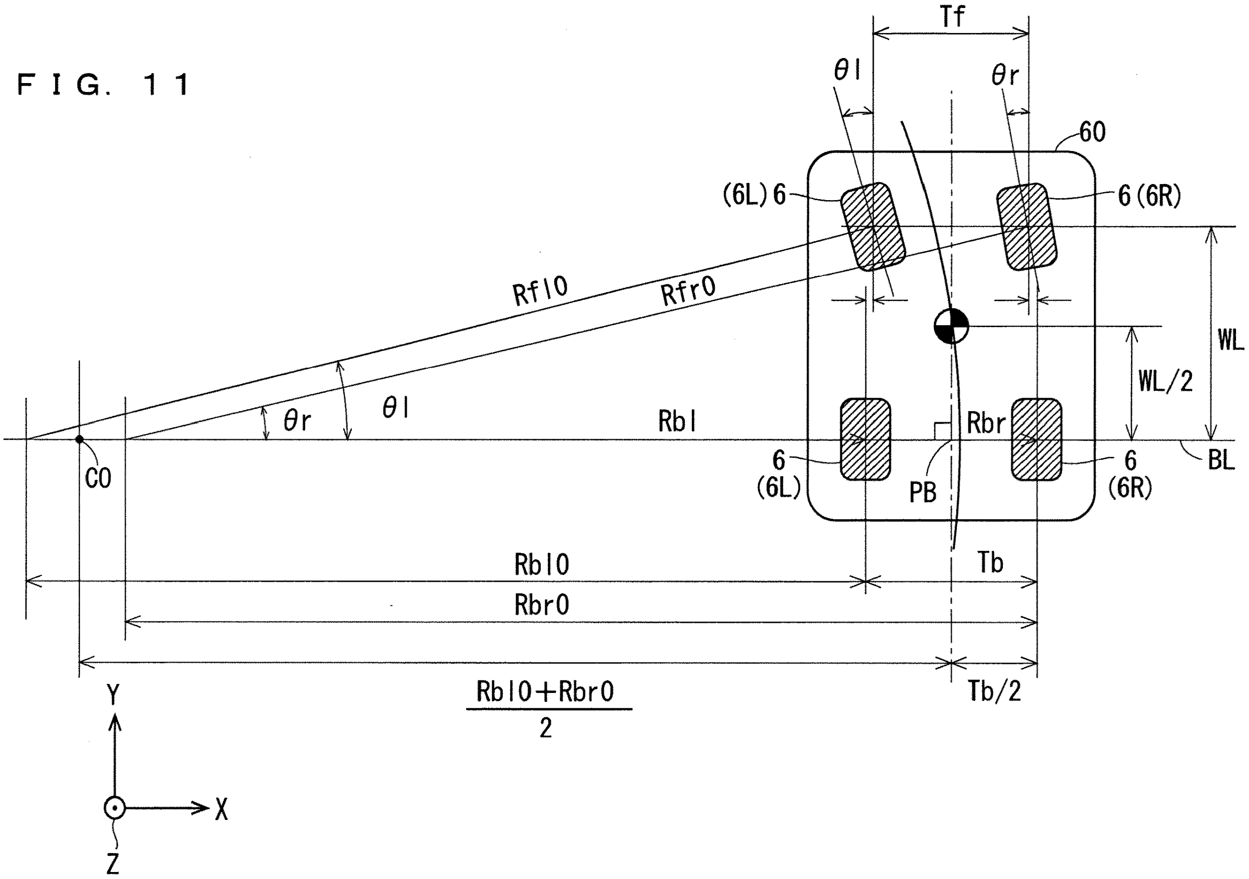
Tf
θl
θr
60
(6L) 6
6 (6R)
Rfl0
Rfr0
WL
WL/2
θr
θl
Rbl
Rbr
6
(6L)
PB
6
(6R)
BL
C0
Rbl0
Tb
Rbr0
Rbl0+Rbr0
2
Tb/2
Y
X
Z

FIG. 12

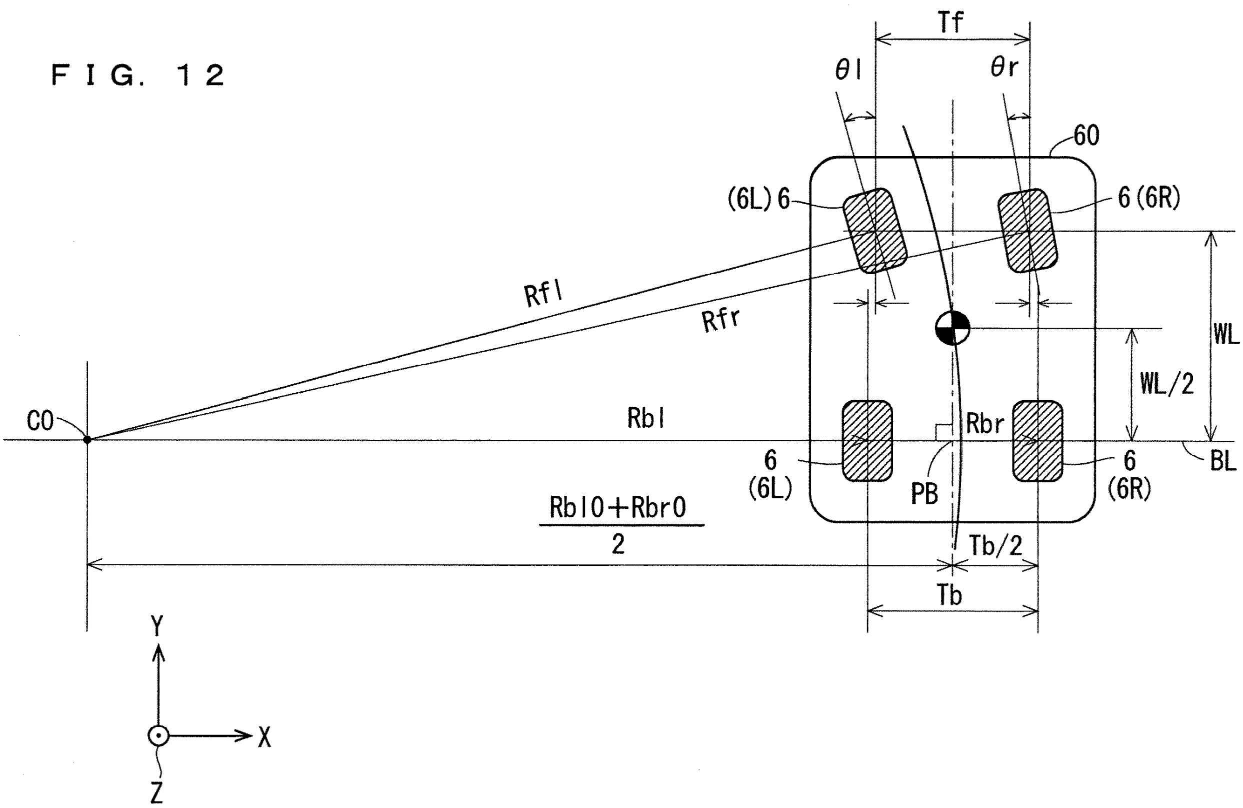
Tf
θl
θr
60
(6L) 6
6 (6R)
Rfl
Rfr
WL
WL/2
CO
Rbl
Rbr
6
(6L)
PB
6
(6R)
BL
Rbl0+Rbr0
2
Tb/2
Tb
Y
X
Z

FIG. 13

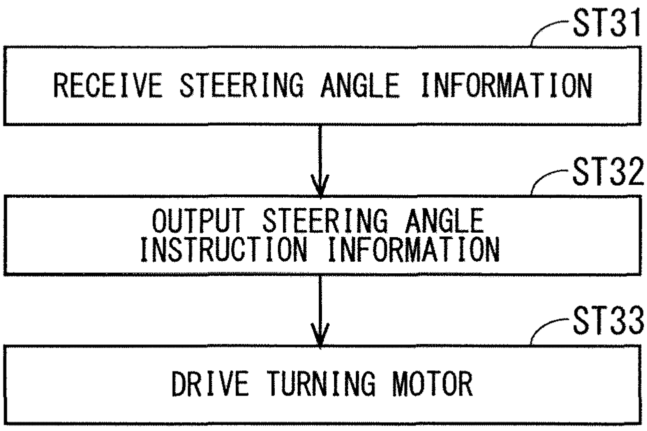
ST31
RECEIVE STEERING ANGLE INFORMATION
ST32
OUTPUT STEERING ANGLE INSTRUCTION INFORMATION
ST33
DRIVE TURNING MOTOR

## INTERNATIONAL SEARCH REPORT

International application No.
**PCT/JP2023/033498**

**A. CLASSIFICATION OF SUBJECT MATTER**

***G01M 17/007***(2006.01)i
FI: G01M17/007 A

According to International Patent Classification (IPC) or to both national classification and IPC

**B. FIELDS SEARCHED**

Minimum documentation searched (classification system followed by classification symbols)

G01M17/007

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2022-175289 A (TOSHIBA MITSUBISHI-ELECTRIC INDUSTRIAL SYSTEMS CORPORATION) 25 November 2022 (2022-11-25)<br>paragraphs [0109], [0149]-[0262] | 1<br>2-9 |
| Y | WO 2022/255237 A1 (HORIBA, LTD.) 08 December 2022 (2022-12-08)<br>paragraphs [0057]-[0066] | 2-9 |
| Y | WO 2020/059380 A1 (HONDA MOTOR CO., LTD.) 26 March 2020 (2020-03-26)<br>paragraph [0030] | 6,8 |
| A | JP 63-117237 A (TOYOTA JIDOSHA KABUSHIKI KAISHA) 21 May 1988 (1988-05-21) | 1-9 |
| A | JP 2009-162627 A (ONO SOKKI CO., LTD.) 23 July 2009 (2009-07-23) | 1-9 |
| A | JP 2019-203869 A (SUN ENGINEERING CO., LTD.) 28 November 2019 (2019-11-28) | 1-9 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 October 2023** | **14 November 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/033498**

| Patent document cited in search report | Publication date (day/month/year) | Patent family member(s) | Publication date (day/month/year) |
|---|---|---|---|
| JP 2022-175289 A | 25 November 2022 | CN 114061968 A | |
| WO 2022/255237 A1 | 08 December 2022 | (Family: none) | |
| WO 2020/059380 A1 | 26 March 2020 | US 2022/0034754 A1<br>paragraph [0037]<br>CN 112740009 A<br>CA 3113396 A1 | |
| JP 63-117237 A | 21 May 1988 | (Family: none) | |
| JP 2009-162627 A | 23 July 2009 | (Family: none) | |
| JP 2019-203869 A | 28 November 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S63148140 A
- JP 2022175289 A